Europäisches Patentamt

European Patent Office

Office européen des brevets

(11) Veröffentlichungsnummer: **0 659 463 A2**

## EUROPÄISCHE PATENTANMELDUNG

(21) Anmeldenummer: **94203212.9**

(22) Anmeldetag: **04.11.94**

(51) Int. Cl.⁶: **B01D 53/04**

(30) Priorität: **23.12.93 DE 4344112**

(43) Veröffentlichungstag der Anmeldung:
**28.06.95 Patentblatt 95/26**

(84) Benannte Vertragsstaaten:
**CH DE FR IT LI NL**

(71) Anmelder: **METALLGESELLSCHAFT AG**
**Reuterweg 14**
**D-60323 Frankfurt am Main (DE)**

(72) Erfinder: **Schaub, Georg, Dr.**
**Im Stockborn 36**
**D-61440 Oberursel (DE)**
Erfinder: **Peters, Rolf, Dr.**
**Brahmsstrasse 35**
**D-61267 Neu-Anspach (DE)**
Erfinder: **Ströder, Michael, Dr.**
**Dürerstrasse 77**
**D-61267 Neu-Anspach (DE)**

(54) Verfahren zur Steuerung der Sorptionsleistung eines Filtrationsabscheiders.

(57) Es wird ein Verfahren zur Steuerung der Sorptionsleistung eines Filtrationsabscheiders beschrieben, bei dem der Abscheider zur Entstaubung von Gasen dient und eine gasdurchlässige Schicht eines Sorptionsmittels trägt, welches die in einem Gas enthaltenen gasförmigen Schadstoffe bindet. Bei diesem Verfahren ist vorgesehen, daß die Masse des auf dem Filtrationsabscheider befindlichen Sorptionsmittels bei steigendem Schadstoffmassenstrom erhöht und bei sinkendem Schadstoffmassenstrom erniedrigt wird, wobei zwischen dem abzuscheidenden Schadstoffmassenstrom und der Masse des unverbrauchten Sorptionsmittels eine lineare Beziehung besteht.

EP 0 659 463 A2

Die Erfindung betrifft ein Verfahren zur Steuerung der Sorptionsleistung eines Filtrationsabscheiders, der einer Vorrichtung zur trockenen oder quasitrockenen Gasreinigung nachgeschaltet ist, der zur Entstaubung der vorgereinigten Gase verwendet wird und der eine gasdurchlässige Schicht eines Sorptionsmittels trägt, das die im Gas enthaltenen gasförmigen Schadstoffe bindet.

Gase, die bei chemischen Reaktionen oder Verbrennungsprozessen entstehen, enthalten vielfach sowohl staubförmige Feststoffteilchen als auch gasförmige Schadstoffe. Die staubförmigen Feststoffteilchen können durch Prallabscheidung, Elektrofiltration und/oder Filtration aus dem Gasstrom abgetrennt werden, während die gasförmigen Schadstoffe - also HF, HCl, $SO_2$, $SO_3$, Hg, Quecksilberverbindungen, Kohlenwasserstoffe und/oder halogenierte Kohlenwasserstoffe - durch chemische Reaktion mit oder physikalische Adsorption an Sorptionsmitteln aus dem Gasstrom entfernt werden. Beispielsweise wird der überwiegende Teil des in Verbrennungsabgasen enthaltenen Staubs durch Elektrofilter oder Zyklone aus dem Abgasstrom abgeschieden. Die in den Verbrennungsabgasen enthaltenen gasförmigen Schadstoffe HF, HCl, $SO_2$ und $SO_3$ können hingegen durch Reaktion mit CaO oder $Ca(OH)_2$ aus dem Abgasstrom entfernt werden, wobei die Reaktion beispielsweise in einem Wirbelschichtreaktor ablaufen kann, dem der Abgasstrom als Wirbelgas und sehr feinteiliges CaO bzw. $Ca(OH)_2$ als Sorptionsmittel zugeführt wird. Die gebildeten Calciumsalze können dann zusammen mit restlichem Staub aus dem Wirbelschichtreaktor abgeführt werden. Zur Feinreinigung kann der Abgasstrom schließlich einem Filtrationsabscheider zugeführt werden, der nicht nur den restlichen Staub, sondern auch die restlichen gasförmigen Schadstoffe aus dem Abgasstrom entfernt. Auf dem Filtrationsabscheider kann nämlich eine aus dem Sorptionsmittel bestehende gasdurchlässige Schicht aufgebracht werden, die während des Gasdurchgangs mit den gasförmigen Schadstoffen reagiert.

Der gemeinsame Einsatz eines Filtrationsabscheiders und einer darauf angeordneten Sorptionsmittelschicht gehört bei vielen Gasreinigungsverfahren zum bekannten Stand der Technik. So erfolgt beispielsweise die gemeinsame Abtrennung des Staubs und der gasförmigen Schadstoffe HCl, HF, $SO_2$ und Hg aus Abgasen der Müllverbrennung durch Filtrationsabscheider, die eine Schicht aus einem Sorptionsmittel tragen, das aus Aktivkohle und Calciumhydroxid besteht und das periodisch durch Pulsen vom Filtrationsabscheider entfernt sowie anschließend neu auf den Filtrationsabscheider aufgebracht wird. Als Filtrationsabscheider können Schlauch- oder Taschenfilter aus Geweben oder keramischem Material verwendet werden. Als Sorptionsmittel eignen sich kohlenstoffhaltige Substanzen, wie Aktivkohle und Herdofenkoks sowie Flugasche, Zeolithe, CaO, $CaCO_3$, $Ca(OH)_2$ und Alumosilikate. Die bekannten Verfahren haben den Nachteil, daß sie die Beladungskapazität der verwendeten Sorptionsmittel nur unzureichend ausnutzen.

Der Erfindung liegt die Aufgabe zugrunde, ein Verfahren der eingangs genannten Art zu schaffen, das den Sorptionsmittelverbrauch minimiert, die Beladungskapazität des Sorptionsmittels weitgehend ausnutzt und auch bei Schwankungen des Schadstoff- und Staubgehalts die Einhaltung einer konstanten sowie minimalen Staub- und Schadstoffkonzentration im Reingas ermöglicht.

Die der Erfindung zugrundeliegende Aufgabe wird dadurch gelöst, daß der Soll-Wert der Masse des auf dem Filtrationsabscheider befindlichen unverbrauchten Sorptionsmittels bei steigendem Schadstoffmassenstrom am Eingang des Filtrationsabscheiders erhöht und bei sinkendem Schadstoffmassenstrom am Eingang des Filtrationsabscheiders erniedrigt wird, wobei zwischen dem im Filtrationsabscheider abzuscheidenden Schadstoffmassenstrom und dem Soll-Wert der Masse des unverbrauchten Sorptionsmittels auf dem Filtrationsabscheider eine lineare Beziehung besteht und wobei der Ist-Wert der Masse des unverbrauchten Sorptionsmittels auf dem Filtrationsabscheider entweder durch die Sorptionsmittelbilanz der vorgeschalteten Vorrichtung unter Berücksichtigung der bei der Abreinigung des Filtrationsabscheiders entstehenden Sorptionsmittelverluste oder durch Analyse des aus dem Filtrationsabscheider abgeführten Feststoffs ermittelt wird und wobei die Angleichung des Ist-Wertes der Masse des unverbrauchten Sorptionsmittels auf dem Filtrationsabscheider an den entsprechenden Soll-Wert durch Änderung des der vorgeschalteten Vorrichtung zugeführten Sorptionsmittelstroms erfolgt. Es hat sich in überraschender Weise gezeigt, daß mit dem erfindungsgemäßen Verfahren sowohl die maximale Ausnutzung der Beladungskapazität als auch die maximale Reinigungsleistung der Sorptionsmittelschicht erreicht werden kann.

Nach der Erfindung ist ferner vorgesehen, daß der Soll-Wert der Masse des unverbrauchten Sorptionsmittels auf dem Filtrationsabscheider auf einen konstanten Minimalwert eingestellt wird, der zwischen 1 und 10 $g/m^2$ Filterfläche beträgt, wenn die Schadstoffkonzentration am Eingang des Filtrationsabscheiders kleiner ist als der Soll-Wert der Schadstoffkonzentration am Ausgang des Filtrationsabscheiders. Durch diese Maßnahme wird die Betriebssicherheit des Reinigungsprozesses bei minimalem Sorptionsmittelverbrauch garantiert, denn auch wenn in dem Filtrationsabscheider keine Schadstoffe entfernt werden müssen, wird das erfindungsgemäße Verfahren trotzdem unter Verwendung eines Sorptionsmittels betrieben, so daß bei plötzlich auftretender Notwendigkeit der Schadstoffentfernung im Filtrationsabscheider immer ausreichend Sorptionsmittel vorhanden ist.

In weiterer Ausgestaltung der Erfindung ist vorgesehen, daß zur Bewältigung von Notsituationen die Erhöhung der Masse des unverbrauchten Sorptionsmittels auf dem Filtrationsabscheider durch Zugabe von Sorptionsmittel unmittelbar vor dem Filtrationsabscheider erfolgt. Durch diese Maßnahme kann sehr schnell die zur Bewältigung von Schadstoffstößen erforderliche Sorptionsmittelmasse in den Filtrationsabscheider eingebracht werden.

Schließlich ist in weiterer Ausgestaltung der Erfindung vorgesehen, daß die Ermittlung des Ist-Wertes der Masse des unverbrauchten Sorptionsmittels auf dem Filtrationsabscheider durch ein dynamisches Prozeßmodell unterstützt wird. Der Begriff "dynamisches Prozeßmodell" beinhaltet die Erfassung aller Meßwerte, die zur Bilanzierung des Sorptionsmittels und der Schadstoffe notwendig sind, die Abtastung dieser Meßwerte in geeigneten zeitlichen Intervallen, die Verrechnung der Daten zu abgeleiteten Prozeßgrößen, die Berechnung der Masse unverbrauchten Sorptionsmittels auf dem Filtrationsabscheider aus den abgeleiteten Prozeßgrößen. Das dynamische Prozeßmodell gewährleistet eine hohe Regelgüte bei geringem Aufwand für Analytik, speziell in Fällen mit schwankenden Betriebswerten.

Die Vorteile des erfindungsgemäßen Verfahrens - also die zuverlässige Einhaltung eines vorgegebenen Staub- und Schadstoffgehalts im Reingas bei minimalem Sorptionsmittelverbrauch und schwankenden Staub- sowie Schadstoffgehalten im Rohgas - sind gemäß der Erfindung dann gegeben, wenn die Beziehung $y = a + k \cdot x$ eingehalten wird, wobei x für den im Filtrationsabscheider abzuscheidenden Schadstoffmassenstrom, a für die immer zu verwendende minimale Masse unverbrauchten Sorptionsmittels, y für den Sollwert der im Filtrationsabscheider befindlichen Masse unverbrauchten Sorptionsmittels und k für einen material- bzw. reaktionsabhängigen Proportionalitätsfaktor steht. Für die einzelnen Sorptionsreaktionen ist der Faktor k durch Versuche zu ermitteln. Der jeweils aktuelle Wert für x ergibt sich aus dem Rohgas-Normalvolumenstrom, der Schadstoffkonzentration am Eingang des Filtrationsabscheiders und dem Soll-Wert der Schadstoffkonzentration am Ausgang des Filtrationsabscheiders. a wird unter Berücksichtigung chemischer und reaktionskinetischer Gesetzmäßigkeiten durch Versuche ermittelt.

Der Gegenstand der Erfindung wird nachfolgend anhand eines Ausführungsbeispiels näher erläutert.

In einer Müllverbrennungsanlage fallen pro Stunde 60 000 $Nm^3$ Verbrennungsabgase an, aus denen Staub, HF, HCl und $SO_2$ entfernt werden müssen. Das Verbrennungsabgas wird zunächst in einem Elektrofilter entstaubt und in einem Sprühabsorber mit Kalkmilch (wäßrige $Ca(OH)_2$-Suspension) zur Reaktion gebracht. In beiden Prozeßapparaten wird sowohl die größte Menge des Staubs als auch die größte Menge der gasförmigen Schadstoffe aus dem Abgas abgetrennt. Nach Verlassen des Sprühabsorbers gelangt das vorgereinigte Abgas in einen Filtrationsabscheider, der als Gewebefilter mit einer Filterfläche von 1800 $m^2$ gestaltet ist. Im Gewebefilter sollen sowohl die restlichen Staubteilchen als auch 250 mg HCl/$Nm^3$ Abgas und 100 mg $SO_2$/$Nm^3$ Abgas abgetrennt werden, so daß das gereinigte Abgas einen HCl-Gehalt von $\leq$ 70 mg/$Nm^3$ und einen $SO_2$-Gehalt von $\leq$ 200 mg/$Nm^3$ aufweist (Soll-Werte der Schadstoffkonzentrationen am Ausgang des Filtrationabscheiders).

Für die im Filtrationsabscheider abzuscheidenden Schadstoffmassenströme ergibt sich:

$$\dot{m}_{HCl} = 60\ 000\ Nm^3/h \cdot 250\ mg/Nm^3 = 15\ kg/h$$

$$\dot{m}_{SO_2} = 60\ 000\ Nm^3/h \cdot 100\ mg/Nm^3 = 6\ kg/h$$

In diesem Beispiel wurden die Parameter bei Bezug auf CaO als Sorptionsmittel gewählt zu:

$a = 18\ kg$
$k_{HCl} = 1,4\ h$

$$k_{SO_2} = 1,9\ h$$

Daraus ergibt sich für y:

$$Y_{CaO} = a + k_{HCl} \cdot \dot{m}_{HCl} + k_{SO_2} \cdot \dot{m}_{SO_2}$$
$$= 18 \; kg + 1,4 \; h \cdot 15 \; kg/h + 1,9 \; h \cdot 6 \; kg/h$$
$$= 50,4 \; kg \; CaO$$

Auf dem Filtrationsabscheider ist also eine Menge von 50,4 kg unverbrauchtes CaO einzustellen, entsprechend 28,0 g $CaO/m^2$ Filterfläche.

Sind aus dem Abgas 500 mg $HCl/Nm^3$ und 150 mg $SO_2/Nm^3$ zu entfernen, ergibt die Rechnung für den Soll-Wert der Masse des unverbrauchten CaO auf dem Filtrationsabscheider:

$$\dot{m}_{HCl} = 60\,000 \; Nm^3/h \cdot 500 \; mg/Nm^3 = 30 \; kg/h$$

$$\dot{m}_{SO_2} = 60\,000 \; Nm^3/h \cdot 150 \; mg/Nm^3 = 9 \; kg/h$$
$$Y_{CaO} = 18 \; kg + 1,4 \; h \cdot 30 \; kg/h + 1,9 \; h \cdot 9 \; kg/h$$
$$= 77,1 \; kg \; CaO$$

Dies entspricht 42,8 g $CaO/m^2$ Filterfläche.

Die Variation der Masse des unverbrauchten CaO geschieht im Normalfall durch Variation des dem Sprühabsorber zugeführten Kalkmilchmassenstroms.

Das erfindungsgemäße Verfahren eignet sich insbesondere zur Abscheidung der Schadstoffe HF, HCl, $SO_2$, $SO_3$, Hg, Kohlenwasserstoffe, vorzugsweise polycyclische aromatische Kohlenwasserstoffe, und kann bevorzugt mit den Sorptionsmitteln $Ca(OH)_2$, CaO, $NaHCO_3$, Gemisch aus Herdofenkoks sowie $Ca(OH)_2$, $CaCO_3$ und/oder Flugasche durchgeführt werden. Mit dem erfindungsgemäßen Verfahren können die zur Zeit für die genannten Schadstoffe gesetzlich vorgeschriebenen Grenzwerte problemlos und zuverlässig eingehalten bzw. unterschritten werden.

**Patentansprüche**

1. Verfahren zur Steuerung der Sorptionsleistung eines Filtrationsabscheiders, der einer Vorrichtung zur trockenen oder quasitrockenen Gasreinigung nachgeschaltet ist, der zur Entstaubung der vorgereinigten Gase verwendet wird und der eine gasdurchlässige Schicht eines Sorptionsmittels trägt, dadurch gekennzeichnet, daß der Soll-Wert der Masse des auf dem Filtrationsabscheider befindlichen unverbrauchten Sorptionsmittels bei steigendem Schadstoffmassenstrom am Eingang des Filtrationsabscheiders erhöht und bei sinkendem Schadstoffmassenstrom am Eingang des Filtrationsabscheiders erniedrigt wird, wobei zwischen dem im Filtrationsabscheider abzuscheidenden Schadstoffmassenstrom und dem Soll-Wert der Masse des unverbrauchten Sorptionsmittels auf dem Filtrationsabscheider eine lineare Beziehung besteht und wobei der Ist-Wert der Masse des unverbrauchten Sorptionsmittels auf dem Filtrationsabscheider entweder durch die Sorptionsmittelbilanz der vorgeschalteten Vorrichtung unter Berücksichtigung der bei der Abreinigung des Filtrationsabscheiders entstehenden Sorptionsmittelverluste oder durch Analyse des aus dem Filtrationsabscheider abgeführten Feststoffs ermittelt wird und wobei die Angleichung des Ist-Wertes der Masse des unverbrauchten Sorptionsmittels auf dem Filtrationsabscheider an den entsprechenden Soll-Wert durch Änderung des der vorgeschalteten Vorrichtung zugeführten Sorptionsmittelstroms erfolgt.

2. Verfahren nach Anspruch 1, dadurch gekennzeichnet, daß der Soll-Wert der Masse unverbrauchten Sorptionsmittels auf dem Filtrationsabscheider auf einen konstanten Minimalwert eingestellt wird, der zwischen 1 und 10 $g/m^2$ Filterfläche beträgt, wenn die Schadstoffkonzentration am Eingang des Filtrationsabscheiders kleiner ist als der Soll-Wert der Schadstoffkonzentration am Ausgang des Filtrationsabscheiders.

3. Verfahren nach den Ansprüchen 1 bis 2, dadurch gekennzeichnet, daß zur Bewältigung von Notsituationen die Erhöhung der Masse des unverbrauchten Sorptionsmittels auf dem Filtrationsabscheider durch Zugabe von Sorptionsmittel unmittelbar vor dem Filtrationsabscheider erfolgt.

4. Verfahren nach den Ansprüchen 1 bis 3, dadurch gekennzeichnet, daß die Ermittlung des Ist-Wertes der Masse des unverbrauchten Sorptionsmittels auf dem Filtrationsabscheider durch ein dynamisches Prozeßmodell unterstützt wird.